# EUROPEAN PATENT SPECIFICATION

(11) **EP 1 178 898 B1**
(45) Date of publication and mention of the grant of the patent: **04.08.2004**
(21) Application number: 00929688.0
(22) Date of filing: 15.05.2000
(51) Int. Cl.: B60N 2/235

(54) **DEVICE FOR RECLINING VEHICLE SEAT**
NEIGUNGSVERSTELLVORRICHTUNG FÜR FAHRZEUGSITZE
DISPOSITIF PERMETTANT DE CONVERTIR DES SIEGES EN COUCHETTES

(30) Priority: 15.05.1999 GB 9911227
(43) Date of publication of application: 13.02.2002
(73) Proprietor: Johnson Controls Automotive (UK) Limited, Telford, Shropshire TF3 3RQ (GB)
(72) Inventor: HOLLOWAY, Ian Pemberton, Warwickshire CV3 7JA (GB); EDMOND, Keith, Shropshire TF9 3BY (GB); MOORE, Simon, Shropshire SY13 4DF (GB)
(74) Representative: Hemmelmann, Klaus
(86) International application number: PCT/GB2000/001782
(87) International publication number: WO 2000/069672

(56) References cited:
- EP-A- 0 489 310
- DE-A- 19 522 897
- DE-A- 19 644 376
- DE-C- 4 237 072
- DE-C- 19 905 363
- FR-A- 2 766 137
- US-A- 4 306 124
- US-A- 5 536 069
- US-A- 5 820 218

## Description

### Description of Invention

This invention relates to a device for a reclining seat for a vehicle, particularly a "memory" device.

The front seats (driver's seat and front passenger seat) of virtually all modem automobiles are reclining seats, i.e. the angle at which the backrest of each seat is inclined in relation to the base cushion of the seat can be adjusted and set as required to suit the physique and personal preference of the seat's occupant. In addition to such adjustment possibilities, the front seats of an automobile which does not have rear passenger doors providing access to the rear seat(s) must additionally be movable to facilitate such rear seat access. The additional movement possible for the front seats may comprise a forward bodily movement of the front seat as a whole and/or a forward pivoting of the backrest of the front seat beyond the range of such pivoting movement which is required when the seat is occupied. The present invention is concerned with the latter mode of adjustment of a seat.

It is of course desirable that after the backrest of a front seat has been pivoted forwardly to an "access" position to provide access to the rear seat, it should return to the attitude it previously adopted relatively to the seat base. If it did not, it would be extremely annoying to, particularly, the driver to have to re-adjust his seat's backrest each time its rear-seat access facility has been utilised. Accordingly there is a requirement for a device which retains an adjusted setting of a seat backrest to enable it to be returned to the required position. Since such a device has to retain or "memorise" a setting while the seat backrest is moved away from and returned to its set inclination, it may, and will herein, be called a "memory" device.

A memory device for use with an electrically operated seat backrest inclination adjuster is disclosed in US-A-4306124, (corresponding to the preambles of claims 1 and 6 respectively).

A memory device in accordance with the invention is intended to work in association with a seat backrest inclination adjustment mechanism of a type which provides for incremental adjustment of the inclination. Such a mechanism characteristically utilises components which move relative to one another as the backrest is adjusted, and which have inter-engaging tooth formations which when engaged maintain the required inclination of the backrest and are disengageable when the inclination is to be adjusted. The mechanism includes a release member operable between a releasing position in which the teeth are caused to be disengaged so that adjustment is possible, and a holding position in which the teeth are caused or permitted to engage to hold the adjusted inclination of the backrest. Such adjustment is possible in increments corresponding to the spacing between adjacent teeth in the mechanism. Such mechanisms are well known. Broadly it is the object of the present invention to provide a memory device which can be added on to a reclining seat with an incremental adjustment device, to enable the seat to be adapted to provide for rear seat access in addition to its normal adjustment.

The present invention is based on the fact that if the seat backrest is required to be pivoted forwardly to permit rear seat access this will in all normal circumstances be required when the seat in question is unoccupied. Similarly backrest inclination adjustment to suit the occupant of the seat will in all normal circumstances be required when the seat is occupied: only when someone is occupying the seat can he or she tell whether he is comfortable.

According to this invention there is provided a vehicle seat comprising adjustment mechanism for adjusting the inclination of the backrest of the seat, comprising components which move relative to one another whilst adjustment is occasioned, and a release member movable between a holding position in which said components are retained in operative engagement and the backrest held at an adjusted inclination, and a releasing position in which said components are operatively disengaged to permit adjustment of the seat backrest,
characterised by the provision of a setting mechanism which is settable in a position in accordance with the backrest inclination, sensing means for sensing whether the seat is occupied and controlling means for controlling said setting mechanism in accordance with whether the seat is occupied or not.

Thus the setting mechanism of the invention can be caused to retain its set position representing the desired backrest inclination when the seat is unoccupied, enabling the backrest to be returned to the desired inclination after it has been pivoted forwardly into its access position, but the setting mechanism can be caused not to retain its set position when the seat is occupied, enabling normal adjustment of the backrest inclination by the seat's occupant.

The setting mechanism preferably cooperates with the release member of a seat backrest inclination adjustment mechanism as described above, and is operable to hold the release member in its releasing position when the backrest is pivoted forwardly while the seat is unoccupied, and permits the release member to return to its holding position when the backrest returns to its previous inclination, thereby causing the backrest inclination adjustment mechanism to be re-engaged to hold the adjusted inclination of the backrest. The point at which the release member is returned to its holding position is determined by the settable memory device.

Preferably the sensing means conveniently comprises a part which is movable under the weight of the seat's occupant. Such a part may readily be incorporated in a vehicle seat, e.g. in a part of a seat frame supporting the seat's padding and upholstery. Movement of such a member may be transmitted to the setting mechanism by way of a flexible cable for example.

The controlling means may include a memory setting assembly having a radially extendable and retractable portion operable to selectively engage a housing portion for returning the backrest inclination from an access position to a pre-set position.

The setting means may comprise a first set of teeth in arcuate array, and a second set of teeth which are moved into a position of engagement with said first set of teeth when the securing means is in its operative condition.

According to this invention there is also provided a setting assembly for use with adjustment mechanism for adjusting the inclination of the backrest of a vehicle seat, said setting assembly comprising means to secure the setting assembly in a pre-set position whilst the backrest is moved to its access position, said securing means being movable between an operative condition, in which it retains the setting assembly in a pre-set position, and an inoperative condition,
characterised by the provision of a sensing means to sense when the seat is occupied, and which is operative when the seat is unoccupied to cause the securing means to adopt its operative condition, and when the seat is occupied to cause the securing means to adopt its inoperative condition.

Conveniently the setting means comprises a first set of teeth in arcuate array, and a second set of teeth which are moved into a position of engagement with said first set of teeth when the securing means is in its operative condition.

These and other features of the invention will now be described by way of example with reference to the accompanying drawings of which:-
Figures 1a, 1b and 1c are views showing a conventional vehicle seat comprising adjustment mechanism to which a setting assembly in accordance with this invention has been mounted;
Figure 2 is an exploded perspective view of the principal components of the device in accordance with the invention;
Figures 3a and 3b are axial views, the latter with a component omitted to show the remaining components, of the device in a first operative position;
Figures 4a, b to Figures 8a, b are views corresponding to Figures 3a and 3b, in successive further operative positions of the device.

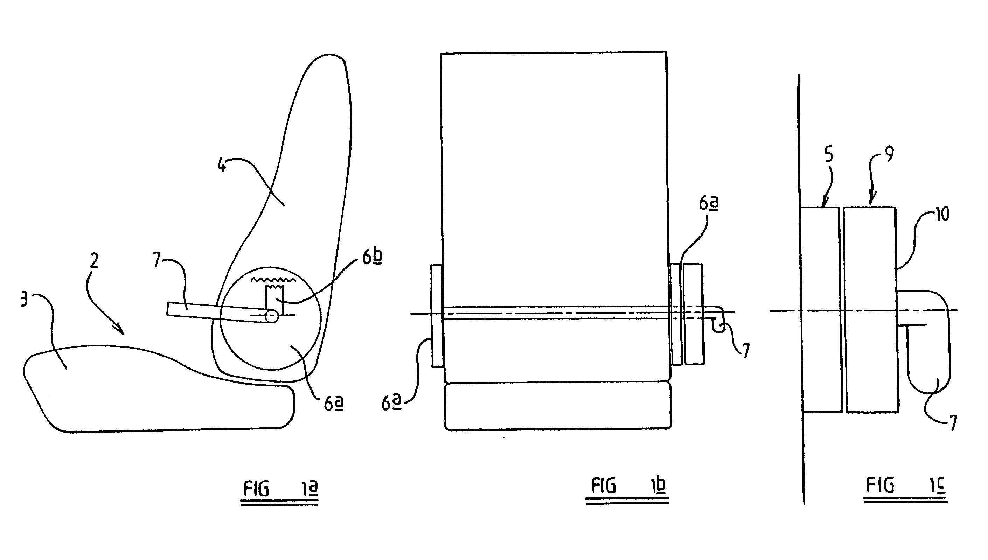

Figure 1 of the accompanying drawings shows a vehicle seat assembly 2 comprising a base cushion 3, a backrest 4 and comprising conventional adjustment mechanism 5, to which the setting assembly 9 in accordance with this invention has been mounted. The adjustment mechanism comprises interengaging toothed formations 6a, 6b, and a release lever 7, movable between an operative position in which the seat may be positionally adjusted, and an inoperative position.

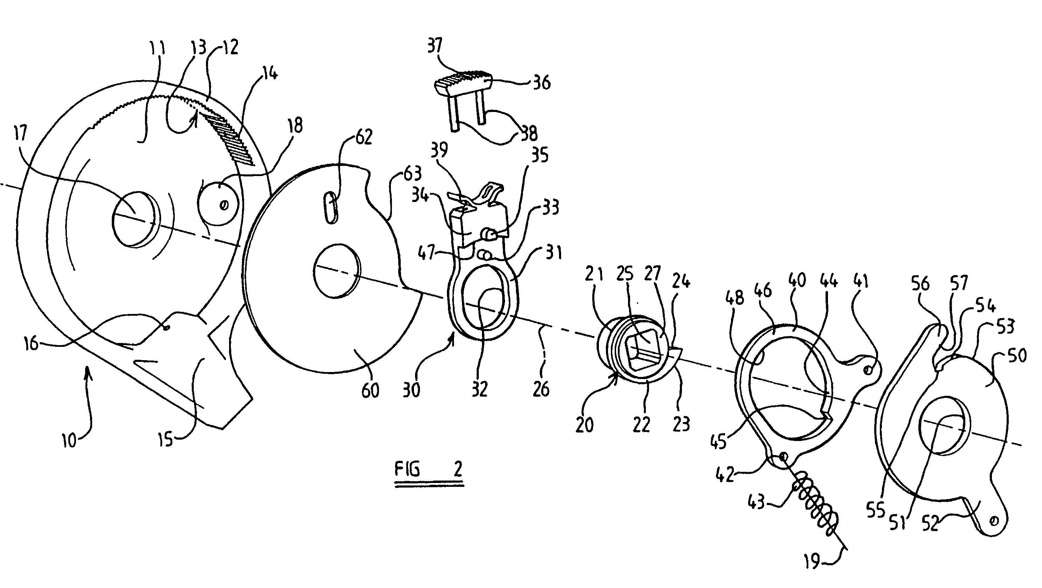

Referring to Figure 2 of the drawings, the mechanism 9 there illustrated comprises a housing 10 which is adapted to be secured in relation to the base cushion of a vehicle seat. It comprises a flat end wall 11 and cylindrical peripheral wall 12 extending therefrom to define an internal cavity in which the components described hereafter are disposed. An arcuate part 13 of the internal circumference of the wall 12 is provided with teeth 14. A part of the wall 12 extends into a cable stop housing 15 which forms an abutment for the outer member of a flexible control cable which extends from a detector means which detects whether the seat is occupied or not. The inner member of the control cable 19 extends through an aperture 16, to engage a locking plate to be described hereafter. The wall 11 has a central aperture 17 and a boss 18 which provides a pivot for a locking plate which is described hereinafter.

Journalled in the aperture 17 is a cam member 20. The cam member 20 has a journal portion 21 which is received in the aperture 17, and a cam portion 22 which lies within the internal space of the housing 17. On its opposite side the cam member 20 is provided with a journal portion 27. The cam portion 22 comprises a cam surface 23 and an abutment 24. The cam member has an internal aperture 25 of square cross-sectional shape, and this is intended to cooperate with a square section shaft carrying a release lever of an incremental adjustment mechanism of the seat, such shaft extending outwardly through the memory device and having the release lever at its end where it is accessible to be manually operated. The axis of such a shaft is shown in Figure 2 at 26.

The mechanism further comprises a setting assembly indicated generally at 30. This comprises a body 31 with an elongate aperture 32 therein through which the cam member 20 passes, the elongate aperture 32 permitting translational movement of the setting assembly radially relative to the axis 26. A first peg 33 extends from the body 31, and a second peg 35 extends from a head part 34 of the body, of increased thickness. Mounted on the head part 34 is a setting member 36 having teeth 37 co-operable as described hereafter with the teeth 14 inside the housing 10. The setting member has posts 38 which engage in apertures in the head portion 34, the latter having a resilient formation 39 which biases the setting member 36 away from the head portion, radially relative to the axis 26. The setting assembly may be constituted as a one-piece moulded plastics component, or may comprise separate components as described.

Mounted between the setting assembly and the housing 10 is a plate 60, provided with a central aperture adapted to receive the boss 21 of the cam member 20, and which is provided with a short radial slot 62, into which a pin (not shown) projecting from the opposite side of the body 31 extends. An arcuate recess 63 is provided in a peripheral region of the plate 60, in which the boss 18 extends. In this way, the setting assembly 31 is permitted to move inwardly and outwardly in the general radial direction, within limits.

The mechanism further comprises a generally annular locking plate 40 having a pivot lug 41 by which the locking plate is pivotally mounted to the boss 18 of the housing 10. The locking plate further comprises a lug 42 to which the inner member of the control cable assembly is connected, such inner member extending through the aperture 16 in the cable stop 15 of the housing 10. The cable assembly, as above described, connects to the occupant detector means of the seat. A spring, for example a helical spring 43 disposed on the inner cable between the cable stop part 15 and the lug 42 pivotally biases the locking plate 40 about its connection to the boss 18 of the housing.

Internally, the locking plate 40 has a central aperture 48 including a cam surface 44 leading to an abutment surface 45 for cooperation with the cam surface 23 and abutment surface 24 of the cam member 20, as described hereafter. It should also be noted that the locking plate 40 lies in face to face relation with the body part 31 of the setting assembly 30, and the peg 33 of the latter projecting into the aperture 48 of the locking plate, so that when the locking plate is pivoted by pulling of the inner cable on its lug 42, the peg 33 is engaged to pull the head part 34 of the locking assembly towards the axis 26. The outer peripheral surface of the part 46 of the locking plate engages an under surface (indicated at 47) of the head part 34, the radial dimension of the part 46 being slightly smaller than the spacing between the peg 33 and surface 47 so that there is a small amount of lost motion therebetween.

Outside the locking plate 40 and in face to face engagement therewith there is a drive plate 50. The drive plate 50, having a central aperture 51 through which the shaft on axis 26 extends, is connected to move angularly about the axis 26 with the backrest of the seat. Such connection may be effected by any suitable means: in Figure 2 of the drawings a lug 52 is shown on the drive plate for this purpose. The drive plate 50 has an external surface part 53 which is arcuate about the axis 26, leading to an inwardly extending profile portion 54 which ends at a notch 55. A lug 56 has an internal cam surface 57 facing the profile surface 54. The surfaces 54, 57 and notch 55 cooperate with the peg 35 on the setting assembly, as described hereafter.

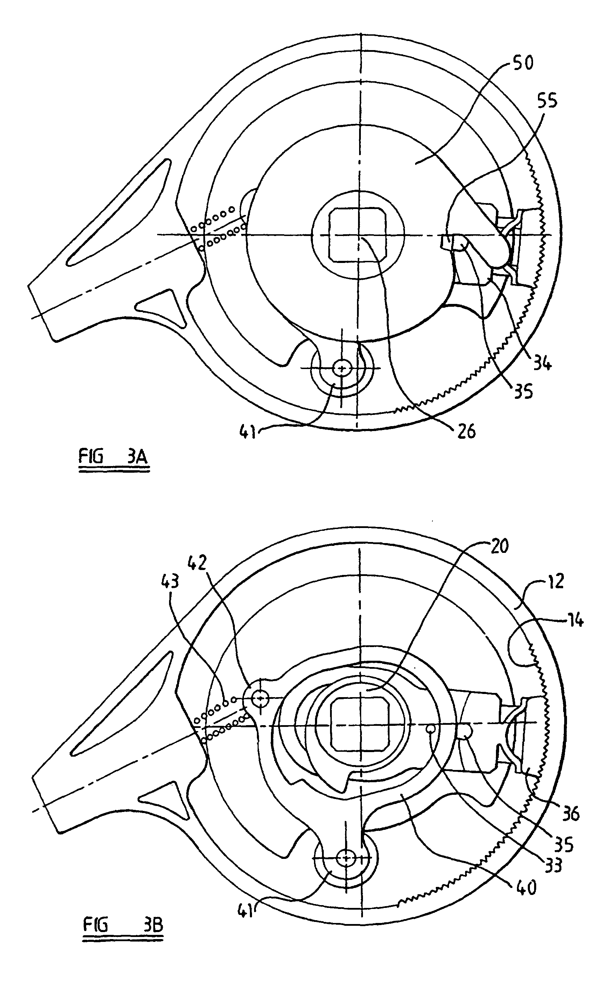

Referring now to Figures 3 to 8 of the drawings, Figure 3a and 3b show a first operative position of the memory device, assumed when the seat is unoccupied and the backrest of the seat is in a typical inclination which it is likely to be required to assume when the vehicle is being driven.

The angular position of the drive plate 50 about the axis 26 represents such a backrest inclination. Because the seat is unoccupied, the lug 42 of the locking plate 40 is not being pulled by the control cable assembly (not shown) and hence the spring 43 biases the locking plate 40 clockwise about its pivot lug 41. Thus the part 46 of the locking plate 40 presses against the head 34 of the setting assembly, moving it radially outwardly so that the setting member 36 engages the teeth 14 inside the wall 12 of the housing 10. It will be noted that in this position the peg 35 on the head 34 of the setting assembly 30 lies outside the notch 55 in the drive plate 50.

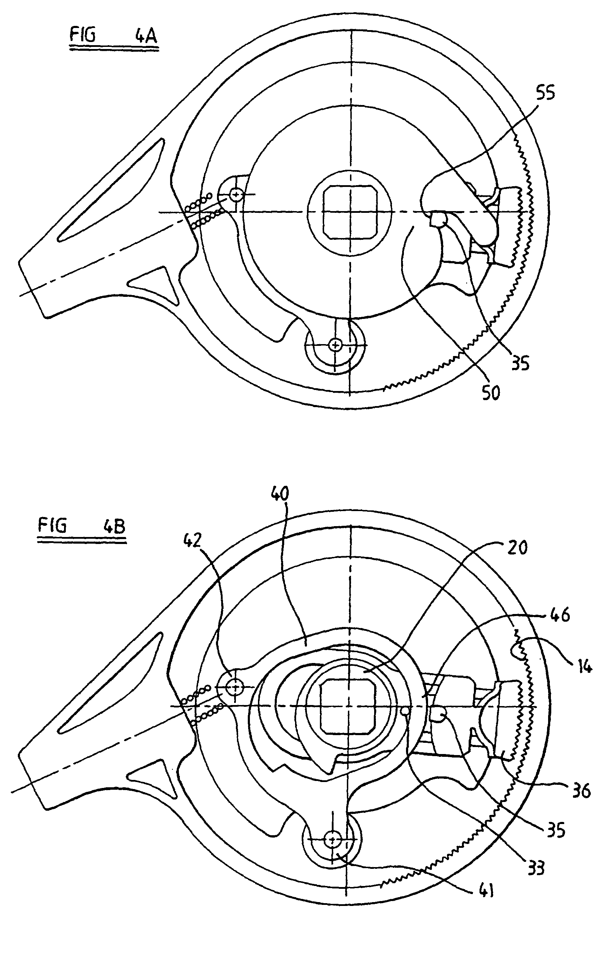

If now the seat is occupied the position shown in Figure 4a and 4b is assumed. The locking plate 40 is pulled by the inner cable 19 connected to lug 42 so as to be pivoted anticlockwise about its pivot lug 41, against the action of spring 43. The part 46 of the locking plate 40 engages the peg 33 and causes radial inward movement of the setting assembly 30 so that the setting member 36 is drawn out of engagement with the teeth 14. At the same time the peg 35 moves into engagement with the notch 55 in the drive plate 50.

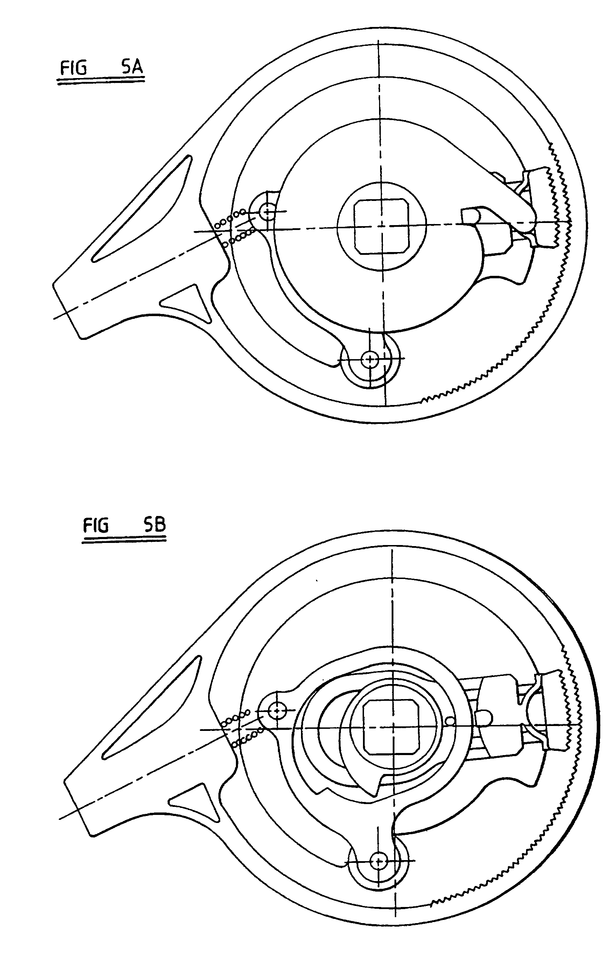

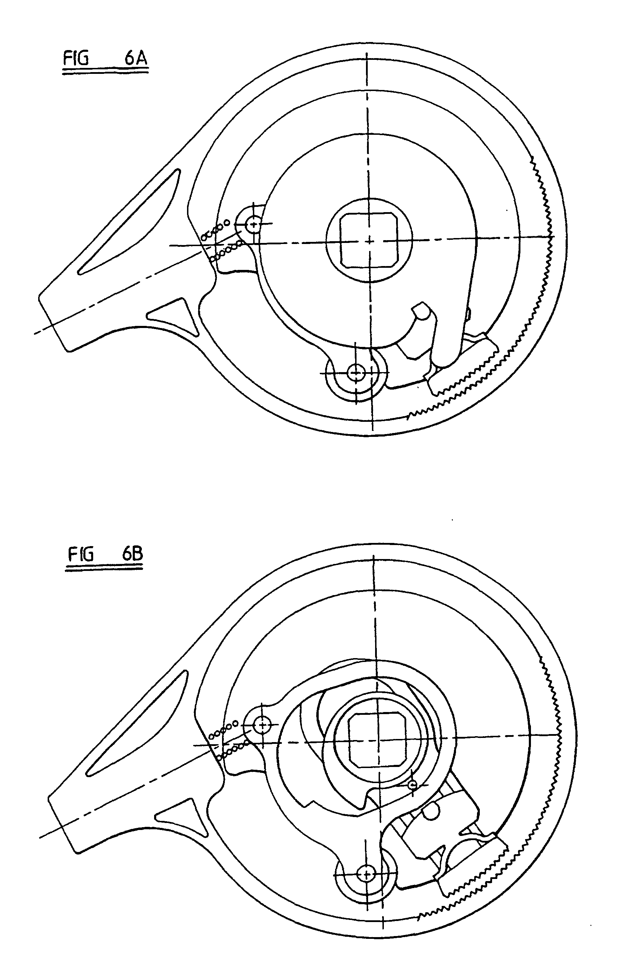

With the seat occupied, the occupant is able to operate the release lever 7 of the seat backrest inclination adjustment mechanism 5 to adjust the inclination of the backrest as desired. Such operation of the release lever will cause the cam member 20, which moves with such lever by virtue of its cooperation with the square shaft carrying the lever, to be moved angularly about the axis 26, but the cam member is not yet shown as having been moved in this way. As the inclination of the backrest is adjusted moving the drive plate 50 therewith, by virtue of the cooperation of the setting assembly 30 with the drive plate 50, i.e. the peg 35 engaging the notch 55, the setting assembly is moved with the backrest. Two extremes of such backrest inclination adjustment are depicted in Figures 5 and 6, the former showing the "fully forward" position and the latter the "fully rearward" or "fully reclined" position.

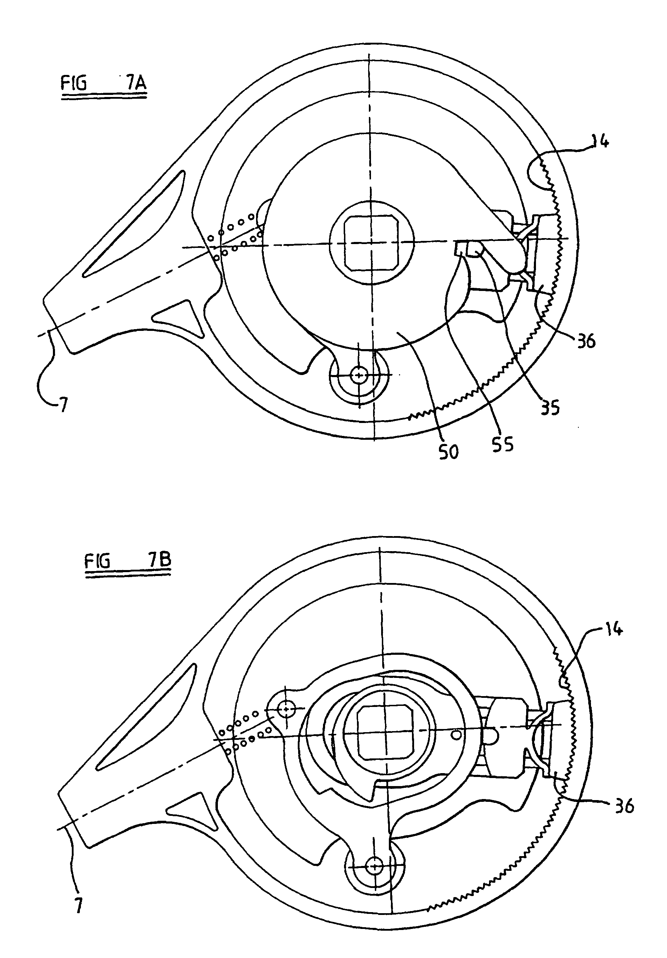

It will assumed now that the seat occupant has left the seat having set the backrest as required. With the weight of the occupant no longer on the seat, the locking plate 40 moves under the action of spring 43 to bear against the surface 47 of head 34 of the setting assembly, once again to urge the toothed setting member 36 into engagement with the teeth 14 in the housing wall 12. The peg 35 is moved out of engagement with the notch 55 in the drive plate 50. This condition, which is the same as that shown in Figure 3, is again shown in Figure 7.

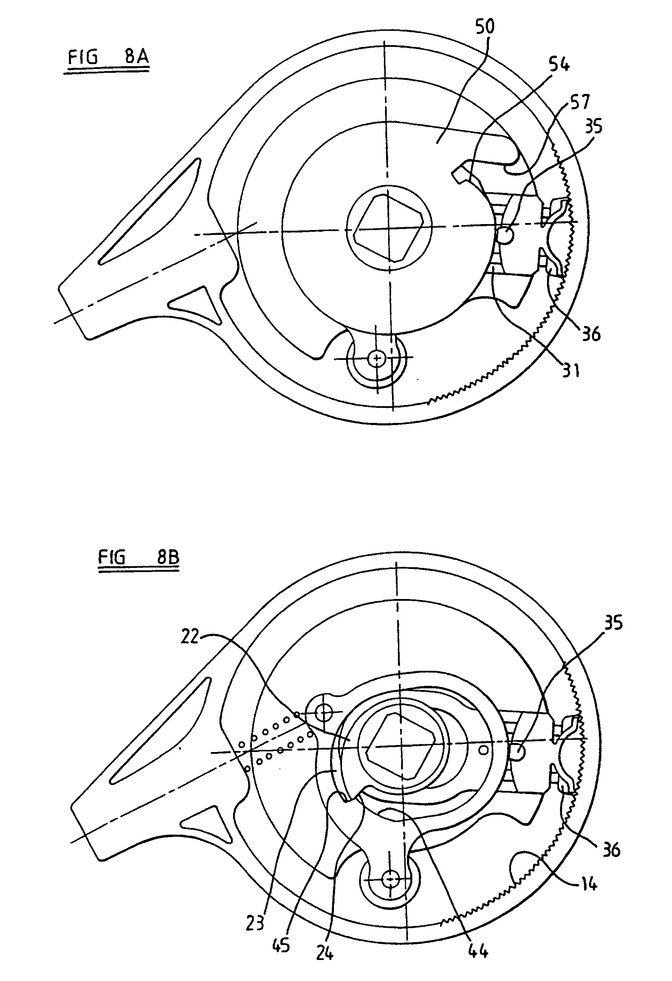

If now having left the seat the former occupant wishes to pivot the backrest fully forwardly for rear seat access, he will operate the release lever 7 of the inclination adjustment mechanism causing that mechanism to be released to free the backrest. At the same time in the memory device such movement of the square shaft whereon the release lever is mounted causes the cam member 20 to be moved angularly until the condition shown in Figures 8a and 8b has been reached. The cam surface 23 of the cam member moves over the surface 44 of the locking plate 40 until the abutment surface 24 on the cam member catches behind the abutment surface 45 on the locking plate. This has the effect that the cam member is held in such a position to hold the release lever in its releasing position, and thus maintain the backrest free for forward pivoting.

When the backrest is thus forwardly pivoted for rear seat access, the drive plate 50 moves to the position shown in Figure 8a. Peg 35 has moved over the profile surface 54 of the drive plate, so the body 31 of the setting assembly 30 is urged radially outwardly and the setting member 36 into firm engagement with the teeth 14. Resilient formations 39 are compressed. Thus while the backrest is pivoted forwardly for rear seat access, the position of the setting assembly prior to such forward pivoting is firmly retained.

When the backrest is returned to its normal position after rear seat access has been effected, the drive plate 50 returns to its previous angular position and as it does so the internal cam surface 57 contacts the peg 35 and moves the body 31 of the setting assembly back towards the axis 26. This causes the locking plate 40 to be pivotally moved anticlockwise until the engagement between abutment surfaces 24, 45 of the cam member 20 and locking plate 40 is released, permitting the cam member and with the release lever and shaft of the seat inclination adjustment mechanism to be returned to its holding position. The components of the memory device are once again returned to their starting position which is shown in Figure 2 and 6.

Thus the invention provides a memory device which can be "added on" to a seat having an incremental backrest inclination adjustment mechanism, and cooperates with a release member of such adjustment mechanism to provide a "memory" facility in respect of the backrest inclination.

It will be appreciated that modifications may be made in respect of the configuration and operational relationship between the components above described whilst retaining the general principle of operation in accordance with the invention.

## Claims

1. A vehicle seat (2) comprising adjustment mechanism (5) for adjusting the inclination of the backrest (4) of the seat (2), comprising components (6a, 6b) which move relative to one another whilst adjustment is occasioned, and a release member (7) movable between a holding position, in which said components are retained in operative engagement and the backrest (4) held at an adjusted inclination, and a releasing position in which said components are operatively disengaged to permit adjustment of the seat backrest (4),
**characterised by** the provision of a setting mechanism (9) which is settable in a position in accordance with the backrest (4) inclination, sensing means for sensing whether the seat (2) is occupied and controlling means (19, 20, 30, 40) for controlling said setting mechanism in accordance with whether the seat (2) is occupied or not.

2. A vehicle seat (2) according to Claim 1 further **characterised in that** the setting mechanism (9) cooperates with the release member (7) of the seat backrest (4) inclination adjustment mechanism (5), and is operable to hold the release member (7) in its releasing position when the backrest (4) is pivoted forwardly while the seat (2) is unoccupied, and permits the release member (7) to return to its holding position when the backrest (4) returns to its previous inclination.

3. A vehicle seat (2) according to Claim 1 or claim 2 further **characterised in that** said sensing means comprises a part which is movable under the weight of the seat's occupant.

4. A vehicle seat (2) according to any preceding claim further **characterised in that** the controlling means (19, 20, 30, 40) includes a memory setting assembly (30) having a radially extendable and retractable portion (36) operable to selectively engage a housing portion (10) for returning the backrest (4) inclination from an access position to a pre-set position.

5. A vehicle seat according to claim 4 further **characterised in that** the setting assembly (30) comprises a first set (14) of teeth in arcuate array, and a second set (37) of teeth which are moved into a position of engagement with said first set of teeth when the securing means is in its operative condition.

6. A setting assembly (30) for use with adjustment mechanism for adjusting the inclination of the backrest (4) of a vehicle seat (2), said setting assembly (30) comprising securing means to secure the setting assembly in a pre-set position whilst the backrest (4) is moved to its access position, said securing means being movable between an operative condition, in which it retains the setting assembly (30) in a pre-set position, and an inoperative condition,
**characterised by** the provision of a sensing means to sense when the seat is occupied, and which is operative when the seat (2) is unoccupied to cause the securing means to adopt its operative condition, and when the seat (2) is occupied to cause the securing means to adopt its inoperative condition.

7. A setting assembly (30) according to claim 6 further **characterised in that** the setting means comprises a first set (14) of teeth in arcuate array, and a second set (37) of teeth which are moved into a position of engagement with said first set of teeth when the securing means is in its operative condition.

## Patentansprüche

1. Fahrzeugsitz (2) mit einem Verstellmechanismus (5) zum Verstellen der Neigung der Rückenlehne (4) des Sitzes (2) mit Bauteilen (6a, 6b), die sich beim Verstellen bezüglich einander bewegen, und einem Freigabeglied (7), das sich zwischen einer Halteposition, in der die Bauteile in Betriebseingriff gehalten werden und die Rückenlehne (4) in einer verstellten Neigung gehalten wird, und einer Freigabeposition, in der die Bauteile betrieblich außer Eingriff sind, um ein Verstellen der Sitzrückenlehne (4) zu gestatten, bewegen kann,
**dadurch gekennzeichnet, dass** ein Einstellmechanismus (9), der in einer Position gemäß der Neigung der Rückenlehne (4) eingestellt werden kann, ein Erfassungsmittel zum Erfassen, ob der Sitz (2) besetzt ist, und ein Steuermittel (19, 20, 30, 40) zum Steuern des Einstellmechanismus in Übereinstimmung damit, ob der Sitz (2) gegebenenfalls besetzt ist, bereitgestellt werden.

2. Fahrzeugsitz (2) nach Anspruch 1, weiterhin **dadurch gekennzeichnet, dass** der Einstellmechanismus (9) mit dem Freigabeglied (7) des Neigungsverstellmechanismus (5) der Sitzrückenlehne (4) zusammenwirkt und so betätigt werden kann, dass er das Freigabeglied (7) in seiner Freigabeposition hält, wenn die Rückenlehne (4) nach vorne geschwenkt wird, wenn der Sitz (2) nicht besetzt ist, und dem Freigabeglied (7) gestattet, in seine Halteposition zurückzukehren, wenn die Rückenlehne (4) zu ihrer vorherigen Neigung zurückkehrt.

3. Fahrzeugsitz (2) nach Anspruch 1 oder 2, weiterhin **dadurch gekennzeichnet, dass** das Erfassungsmittel einen Teil umfasst, der sich unter dem Gewicht desjenigen, der auf dem Sitz sitzt, bewegen lässt.

4. Fahrzeugsitz (2) nach einem der vorhergehenden Ansprüche, weiterhin **dadurch gekennzeichnet, dass** das Steuermittel (19, 20, 30, 40) eine Einstellungserinnerungsanordnung (30) mit einem radial ausfahr- und einziehbaren Abschnitt (36) umfasst, der so betrieben werden kann, dass er einen Gehäuseabschnitt (10) gezielt in Eingriff nimmt, so dass die Neigung der Rückenlehne (4) aus einer Zugangsposition in eine Voreinstellungsposition zurückkehrt.

5. Fahrzeugsitz nach Anspruch 4, weiterhin **dadurch gekennzeichnet, dass** die Einstellanordnung (30) einen ersten Satz (14) Zähne in bogenförmiger Anordnung und einen zweiten Satz (37) Zähne umfasst, die in eine Position bewegt werden, in der sie mit dem ersten Satz Zähne in Eingriff stehen, wenn das Fixierungsmittel in seinem Betriebszustand ist.

6. Einstellanordnung (30) zum Einsatz mit einem Verstellmechanimus zum Verstellen der Neigung der Rückenlehne (4) eines Fahrzeugsitzes (2), wobei die Einstellanordnung (30) ein Fixierungsmittel zum Fixieren der Einstellanordnung in einer voreingestellten Position, während die Rückenlehne (4) in ihre Zugangsposition bewegt wird, umfasst, wobei das Fixierungsmittel zwischen einem Betriebszustand, in dem es die Einstellanordnung (30) in einer voreingestellten Position hält, und einem Außerbetriebszustand bewegt werden kann, **gekennzeichnet durch** die Bereitstellung eines Erfassungsmittels, das erfasst, wann der Sitz besetzt ist, und das veranlasst, dass das Fixierungsmittel seinen Betriebszustand einnimmt, wenn der Sitz (2) nicht besetzt ist, und dass das Fixierungsmittel seinen Außerbetriebszustand einnimmt, wenn der Sitz (2) besetzt ist.

7. Einstellanordnung (30) nach Anspruch 6, weiterhin **dadurch gekennzeichnet, dass** das Einstellmittel einen ersten Satz (14) Zähne in bogenförmiger Anordnung und einen zweiten Satz (37) Zähne umfasst, die in eine Position bewegt werden, in der sie mit dem ersten Satz Zähne in Eingriff stehen, wenn das Fixierungsmittel in seinem Betriebszustand ist.

## Revendications

1. Siège de véhicule (2) comprenant un mécanisme d'ajustement (5) pour ajuster l'inclinaison du dossier (4) du siège (2), comprenant des composants (6a, 6b) qui se déplacent l'un par rapport à l'autre au cours de l'ajustement, et un organe de libération (7) pouvant être déplacé entre une position de retenue dans laquelle lesdits composants sont retenus en engagement fonctionnel et le dossier (4) est maintenu suivant une inclinaison ajustée, et une position de libération dans laquelle lesdits composants sont désengagés fonctionnellement pour permettre l'ajustement du dossier (4) du siège,
**caractérisé par** la fourniture d'un mécanisme de réglage (9) qui peut être fixé dans une position en fonction de l'inclinaison du dossier (4), de moyens de détection pour détecter si le siège (2) est occupé et de moyens de contrôle (19, 20, 30, 40) pour contrôler ledit mécanisme de fixation en fonction de l'occupation ou non du siège (2).

2. Siège de véhicule (2) selon la revendication 1, **caractérisé en outre en ce que** le mécanisme de fixation (9) coopère avec l'organe de libération (7) du mécanisme (5) d'ajustement de l'inclinaison du dossier (4) du siège, et peut fonctionner de manière à retenir l'organe de libération (7) dans sa position de libération lorsque le dossier (4) est pivoté vers l'avant tandis que le siège (2) n'est pas occupé, et permet à l'organe de libération (7) de revenir dans sa position de retenue lorsque le dossier (4) revient dans son inclinaison préalable.

3. Siège de véhicule (2) selon la revendication 1 ou 2, **caractérisé en outre en ce que** ledit moyen de détection comprend une partie qui peut se déplacer sous le poids de l'occupant du siège.

4. Siège de véhicule (2) selon l'une quelconque des revendications précédentes, **caractérisé en outre en ce que** le moyen de contrôle (19, 20, 30, 40) comporte un ensemble de réglage de mémoire (30) ayant une portion (36) pouvant sortir et rentrer radialement et fonctionnant de manière à engager sélectivement une portion de retenue (10) pour faire revenir l'inclinaison du dossier (4) d'une position d'accès à une position pré-réglée.

5. Siège de véhicule selon la revendication 4, **caractérisé en outre en ce que** l'ensemble de réglage (30) comprend un premier jeu (14) de dents suivant une rangée cintrée, et un deuxième jeu (37) de dents qui sont déplacées dans une position d'engagement avec ledit premier jeu de dents lorsque le moyen de fixation est dans l'état fonctionnel.

6. Ensemble de réglage (30) destiné à être utilisé avec un mécanisme d'ajustement pour ajuster l'inclinaison du dossier (4) d'un siège de véhicule (2), ledit ensemble de réglage (30) comprenant un moyen de fixation pour fixer l'ensemble de réglage dans une position pré-réglée tandis que le dossier (4) est déplacé dans sa position d'accès, ledit moyen de fixation pouvant être déplacé entre une position fonctionnelle dans laquelle il retient l'ensemble de réglage (30) dans une position pré-réglée, et une position non fonctionnelle,
**caractérisé par** la fourniture d'un moyen de détection pour détecter quand le siège est occupé et qui fonctionne lorsque le siège (2) n'est pas occupé pour faire prendre au moyen de fixation sa position fonctionnelle, et lorsque le siège (2) est occupé pour faire prendre au moyen de fixation sa position non fonctionnelle.

7. Ensemble de réglage (30) selon la revendication 6, **caractérisé en outre en ce que** le moyen de réglage comprend un premier jeu (14) de dents dans une rangée cintrée et un deuxième jeu (37) de dents qui sont déplacées en position d'engagement avec ledit premier jeu de dents lorsque le moyen de fixation est dans sa position fonctionnelle.
